# EUROPÄISCHE PATENTSCHRIFT

(11) **EP 1 599 367 B1**
(45) Veröffentlichungstag und Bekanntmachung des Hinweises auf die Patenterteilung: **06.12.2006**
(21) Anmeldenummer: 03773552.9
(22) Anmeldetag: 18.10.2003
(51) Int. Cl.: B60R 21/01

(54) **SENSORANORDNUNG ZUR AUFPRALLERKENNUNG**
SENSOR ARRANGEMENT FOR THE DETECTION OF COLLISIONS
DISPOSITIF CAPTEUR POUR LA DETECTION DE COLLISIONS

(30) Priorität: 24.02.2003 DE 10307745
(43) Veröffentlichungstag der Anmeldung: 30.11.2005
(73) Patentinhaber: ROBERT BOSCH GMBH, 70442 Stuttgart (DE)
(72) Erfinder: MATTES, Bernhard, 74343 Sachsenheim (DE); MALICKI, Siegfried, 74379 Ingersheim (DE)
(86) Internationale Anmeldenummer: PCT/DE2003/003501
(87) Internationale Veröffentlichungsnummer: WO 2004/076241

(56) Entgegenhaltungen:
- EP-A- 1 306 269
- DE-A- 10 017 084
- DE-C- 10 134 331
- US-A1- 2002 156 561
- KOSIAK W K ET AL: "FUTURE TRENDS IN RESTRAINT SYSTEMS ELECTRONICS" AUTOMOTIVE ENGINEERING INTERNATIONAL, SAE INTERNATIONAL, US, Bd. 107, Nr. 9, September 1999 (1999-09), Seiten 1-6, XP000860904 ISSN: 0098-2571

## Beschreibung

### Stand der Technik

Die Erfindung geht aus von einer Sensoranordnung zur Aufprallerkennung nach der Gattung des unabhängigen Patentanspruchs.

Aus DE 196 09 290 C2 ist es bereits bekannt, bei einem Rückhaltesystem zur Aufprallerkennung ausgelagerte Sensoren zu verwenden.

Aus DE 100 17 084 A1 ist es bekannt, Beschleunigungsaufnehmer nahe der A-Säule bzw. der C-Säule eines Fahrzeugs anzuordnen. Dabei sind die Aufnehmer in allen Raumrichtungen, Fahrzeuglängs-, Fahrzeugsquer- und Fahrzeugvertikalrichtung, empfindlich. Aus DE 101 34 331 C1 ist es bekannt, Beschleunigungssensoren in der Fahrzeugfront anzuordnen. Aus der gattungsbildenden älteren europäischen Patentanmeldung EP 1 306 269 A2 ist es bekannt, in der Fahrzeugfront mehrdimensionale Sensoren anzuordnen.

### Vorteile der Erfindung

Die erfindungsgemäße Sensoranordnung zur Aufprallerkennung mit den Merkmalen des unabhängigen Patentanspruchs hat demgegenüber den Vorteil, dass nunmehr eine Sensoranordnung für eine Frontaufprallerkennung vorgesehen ist, die eine Sensorik aufweist, die sowohl kinematische Größen in Fahrzeuglängsrichtung, als auch in der Fahrzeugvertikalrichtung, also in Z-Richtung, erfassen kann. Dies ist insbesondere bei LKW-Unterfahren, bei den sogenannten "Truck-Underride-Crashes" von großem Vorteil, in denen solche ausgelagerten Sensoren, die im allgemeinen als Upfrontsensoren bezeichnet werden, eine rechtzeitige Auslösung von Rückhaltemitteln ermöglichen sollen. Insbesondere kann es vorkommen, dass die Teile der Karosserie, an denen die Upfrontsensoren befestigt werden, während des Crashes verbogen werden und so die Upfrontsensoren nicht mehr in Fahrzeuglängsrichtung ausgerichtet sind. Es ist vielmehr zu erwarten, dass sie dann annährend in Vertikalrichtung nach oben oder nach unten ausgerichtet sein werden. Daher ist erfindungsgemäß vorgesehen, Sensoren zu verwenden, die auch kinematische Größen in Fahrzeugvertikalrichtung erfassen, um dann auch bei einem Verbiegen kinematische Größen in Fahrzeuglängsrichtung erfassen zu können. Denn nur in Fahrzeuglängsrichtung, also in X-Richtung, empfindliche Upfrontsensoren werden durch einen solchen Aufprall deorientiert und können je nach Aufprallkonstellation nur noch einen größeren oder kleineren Teil der X-Verzögerungskomponenten erfassen. Die einfachste Ausführungsform ist daher, Beschleunigungssensoren in X- und Z-Richtung als Upfrontsensoren vorzusehen. Es ist jedoch möglich, dass auch winklig zur X- und Z-Richtung angeordnete Beschleunigungssensoren verwendet werden, um beispielsweise durch mehrere solcher winklig angeordneter Beschleunigungssensoren auch die Crashrichtung zu erfassen. Auch ein zusätzlicher Y-Sensor kann hier zur Crashrichtungserfassung verwendet werden, und auch zur Plausibilität.

Durch die in den abhängigen Ansprüchen aufgeführten Maßnahmen und Weiterbildungen sind vorteilhafte Verbesserungen der im unabhängigen Patentanspruch angegebenen Sensoranordnung möglich.

Besonders vorteilhaft ist, dass Beschleunigungssensoren vorgesehen sind, um die kinematischen Größen, also hier die Beschleunigung in Fahrzeuglängsrichtung und in Fahrzeugvertikalrichtung, zu erfassen. Wie oben dargestellt, können die Beschleunigungssensoren direkt in Fahrzeuglängs- bzw. Fahrzeugvertikakichtung angeordnet sein, aber auch winklig dazu, beispielsweise in 45°. Auch andere Sensoren, die solche kinematischen Größen bei einem Aufprall erfassen können, sind hier einsetzbar.

Vorteilhafter Weise sind der erste und der zweite Beschleunigungssensor in einem gemeinsamen Gehäuse untergebracht. Dies spart Kabellänge und vereinfacht den Einbau der Sensoranordnung. Alternativ ist es jedoch möglich, dass die Beschleunigungssensoren auch in getrennten Gehäusen verbaut werden können. Dies kann eine Vereinfachung bringen.

Die Sensoranordnung ist mit einem Steuergerät für Rückhaltesysteme derart verbunden, dass das Steuergerät anhand der Signale des ersten und zweiten Beschleunigungssensors erkennen kann, welcher in Fahrzeuglängsrichtung bzw. Fahrzeugvertikalrichtung oder winklig dazu angeordnet ist. Dies erkennt das Steuergerät daran, welcher Sensor das betragsmäßig größere Signal liefert. Bei einem Aufprall wird eine Fahrzeuglängskomponente immer ein größeres Signal liefern, als eine Fahrzeugvertikalkomponente. Folglich wird bei einem solchen Aufprall der Sensor das größere Signal liefern, der am nächsten zur Fahrzeuglängsrichtung angeordnet ist, auch wenn der Kühler verbogen ist. Die Sensoranordnung ist nämlich vorzugsweise am oberen Kühlerquerträger angeordnet. Dabei kann es vorgesehen sein, dass Paare von solchen ersten und zweiten Beschleunigungssensoren an der rechten und linken Seite des Kühlerquerträgers angeordnet sind oder nur ein einziges Paar, das mittig am Kühlerquerträger angeordnet ist.

### Zeichnung

Ausführungsbeispiele der Erfindung sind in der Zeichnung dargestellt und werden in der nachfolgenden Beschreibung näher erläutert.

### Es zeigen

- Figur 1: ein Blockschaltbild der erfindungsgemäßen Sensoranordnung,
- Figur 2: eine alternative Konfiguration der Beschleunigungssensoren,
- Figur 3: ein Drehvorgang der Sensoren während eines Crashes,
- Figur 4: eine schematische Darstellung des Einbauorts der Upfrontsensoren,
- Figur 5: eine weitere schematische Darstellung des Einbauorts der Sensoren und
- Figur 6: ein Modell der Knautschzone und den Einbauort der Upfrontsensoren.

### Beschreibung

Zur Zeit im Einsatz befindliche Upfrontsensoren sind nur in Fahrzeuglängsrichtung messende, in der vorderen Knautschzone des Fahrzeugs, d.h. auf dem Kühlerquerträger eingebaute, Beschleunigungssensoren. Es ist möglich, dass die Beschleunigungssensoren auch in Y-Richtung, beispielsweise zur Crashrichtungserkennung, sensieren können. Die Upfrontsensoren dienen im Wesentlichen zur besseren Erkennung von Frontalproblemcrashes, wie bei einem Schrägaufprall, bei LKW-Unterfahrten, bei Aufprallen gegen weiche Hindernisse wie bei Kollisionen mit größeren Tieren wie Elchen, Pferden oder Kühen.

In sehr verletzungsgefährlichen und zentral viel zu spät detektierbaren LKW-Unterfahrten, in denen die Upfrontsensoren eigentlich die rechtzeitige Auslösung ermöglichen sollten, kommt es bei den heutigen Upfrontsensoren und Konstellationen und Konfigurationen, also in den Sensoranordnungen, vor, dass die mechanisch nicht so stabilen Kühlerquerträger vor der Crasherkennung nach oben oder unten, je nach Aufprallobjekthöhe, verbogen werden. Mit Aufprallobjekten sind hier das LKW-Hinterteil, d.h. der LKW-Hänger-Unterfahrschutz, die LKW-Hänger-Längsträger, die LKW-Anhängerkupplung oder die LKW-Pritschenunterkante gemeint. Die Aufprallfahrzeuglängsträger unterfahren diese Objekte. Deshalb sind diese Crashes so gefährlich und so spät zentral zu detektieren.

Die nur in X-Richtung empfindlichen Upfrontsensoren werden durch den Aufprall deorientiert und können je nach Aufprallkonstellation nur noch einen größeren oder kleineren Teil der X-Verzögerungskomponente erkennen. Es gab bereits leider mehrere Fälle, in denen das Insassenschutzsystem bei LKW-Unterfahrten wegen deorientierter Upfrontsensoren nicht oder zu spät ausgelöst hat und die Insassen verletzt wurden.

Erfindungsgemäß wird daher eine Sensoranordnung vorgeschlagen, die in der Fahrzeugfront angeordnet ist und die derart konfiguriert ist, dass sie kinematische Größen in Fahrzeuglängsrichtung und in Fahrzeugvertikalrichtung erfassen kann. Es liegt daher ein Upfrontsensor mit in der Regel zweikanaligen Beschleunigungssensoren vor, also in X- und Z-Richtung. Zusätzlich kann noch vorgesehen sein, dass die Sensoranordnung auch derart konfiguriert ist, dass sie Beschleunigungen auch in Fahrzeugquerrichtung bzw. andere kinematische Größen erfassen kann. Damit ist dann auch leicht die Crashrichtung identifizierbar.

Bei einem normalen Crash, d.h. der Kühlerquerträger wird nicht vor der Auslösung nach oben oder unten verbogen, sensiert der in X-Richtung empfindliche Beschleunigungssensor im Upfrontsensor, also in der Sensoranordnung, den Problemcrash. Hier gilt zum Beispiel, dass das größte Beschleunigungssignal in X-Richtung im Auslösealgorithmus zur Integralbildung herangezogen wird. Die in Z-Richtung empfindlichen Sensoren in der Sensoranordnung sehen zwar die Beschleunigungs-Z-Anteile, die es in jedem Crash gibt, diese sind jedoch weit kleiner, als die X-Beschleunigungskomponenten und sind nur sekundär für die Auslösezeitpunktbestimmung relevant. Sie könnten zur Plausibilität verwendet werden.

Weiterhin kann die Z-Information vorteilhafter Weise auch zur Aufprallarterkennung bzw. -diskriminierung genutzt werden.

Bei vor der Auslösung verformten Kühlerquerträgern, was bei den schweren Problemcrashes vorkommen kann, bei denen die nur in X-Richtung empfindlichen Upfrontsensoren schon mehrfach versagt haben, sehen die X-Sensoren die X-Beschleunigungskomponenten nicht mehr oder nur noch teilweise, weil sie jetzt mehr oder weniger in Richtung der Z-Achse ausgerichtet sind. Werden die Kühlerquerträger und damit die Upfrontsensoren nach oben gedreht, so sensieren die ursprünglichen X-Sensoren in Z-Richtung und die nun erfindungsgemäß vorgesehenen Z-Sensoren in -X-Richtung. Bei einer Drehung nach unten sensieren die ursprünglichen X-Sensoren in -Z-Richtung und die ursprünglichen Z-Sensoren in X-Richtung. Entsprechende Äquivalente, dass also die Z-Sensoren von Anfang an in Z-Richtung und/oder die X-Sensoren in -X-Richtung angeordnet sind, sind für den Fachmann platt selbstverständlich.

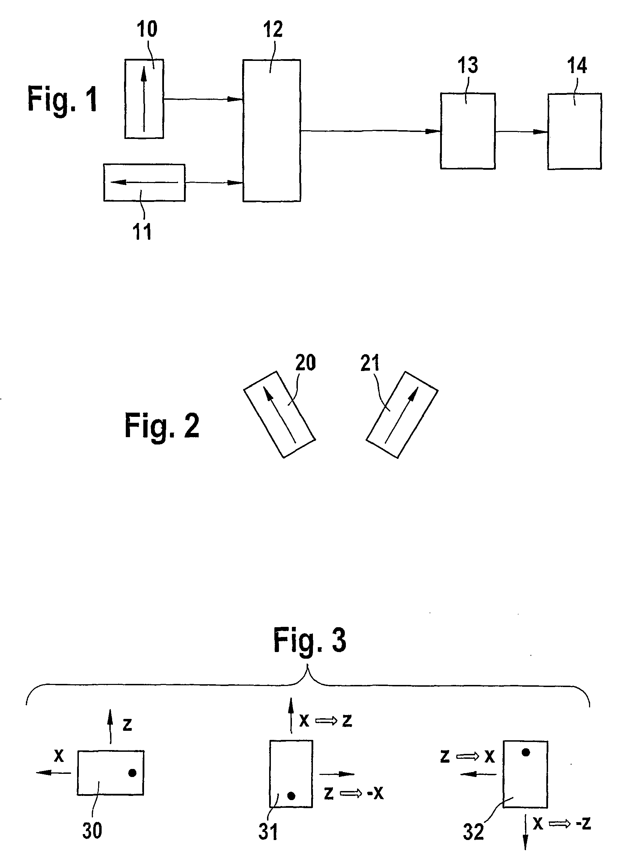

Figur 3 zeigt die Abläufe bei einer Drehung der Sensoranordnung. Die Anordnung 30 ist noch richtig orientiert, die Beschleunigungssensoren sensieren in X- und in Z-Richtung. Die Anordnung 31 ist nunmehr nach oben gedreht, der ursprüngliche X-Sensor sensiert in Z-Richtung und der ursprüngliche Z-Sensor in -X-Richtung. Die Anordnung 32 ist nach unten gedreht, hier sensiert der ursprüngliche Z-Sensor in X-Richtung und der ursprüngliche X-Sensor in -Z-Richtung. Dies sind Idealfälle, im Normalfall werden die Sensoren winklig zum Koordinatensystem auch bei einer Drehung angeordnet sein, so dass dies bei der Auswertung berücksichtigt werden muss.

Ein Kühlerquerträger und damit eine Drehung der Sensoranordnung erkennt man daran, dass bei einem Crash die ursprünglichen Z-Sensoren betragsmäßig das größere Signal, die ursprünglichen X-Sensoren betragsmäßig das kleinere Signal erfassen. Damit erkennt man, dass ein Aufprall stattgefunden hat, der für ein ausschließlich zentral sensiernedes Insassenschutzsystem einen sogenannten Problemcrash darstellt. Ein Algorithmus zur Bildung der Auslöseentscheidung kann in diesen Fällen entweder auf eine Default-Parameter-Einstellung gesetzt werden oder die Z-Signale werden zur Auslösezeitpunktbestimmung verwendet. Folglich kann man auch durch gedrehte Sensoranordnungen und eigentlich desorientierte Sensoren einen Crash gut erkennen und somit einen Schutz für die Insassen erreichen. Dies bedeutet eine wesentliche Verbesserung für deren Sicherheit.

Figur 1 zeigt in einem Blockschaltbild ein Ausführungsbeispiel der erfindungsgemäßen Anordnung. Ein Sensor 10 in Z-Richtung als Beschleunigungssensor ist an einen ersten Dateneingang einer Sensorsignalaufbereitung 12 angeschlossen. Ein X-Beschleunigungssensor 11 ist an einen zweiten Dateneingang der Sensordatenaufbereitung 12 angeschlossen. Die Sensordatenaufbereitung 12 ist über eine uni- oder bidirektional konfigurierte Datenübertragung mit einem Steuergerät 13 für Rückhaltesysteme verbunden. Das Steuergerät 13 ist wiederum mit Rückhaltemitteln 14 wie Airbags, Gurtstraffer oder Überrollbügel verbunden.

Die Upfrontsensoren 10 und 11 der Sensordatenauswertung 12, die auch einen Übertragungsbaustein aufweist, um die Daten, die digitalisiert und aufbereitet wurden, an das Steuergerät 13 zu übertragen, dienen zur Crasherkennung. Alternativ ist es auch noch möglich, dass Sensoren in Y-Richtung angeordnet sind, um die Crashrichtung besser zu detektieren. Das Steuergerät 13 wertet die Signale aus und beeinflusst in Abhängigkeit von diesen Signalen den Auslösealgorithmus und damit die Auslöseentscheidung für die Rückhaltemittel 14, wie entsprechend weitere Daten, wie eine Insassenerkennung und weitere Sensordaten von anderen Sensoren, die beispielsweise im Steuergerät 13 selbst angeordnet sind, zum Beispiel zur Plausibilisierung der Signale der Sensoren 10 und 11. Die Sensoren 10 und 11 sowie die Sensordatenauswertung 12 können in einem gemeinsamen Gehäuse untergebracht sein. Es kann jedoch vorgesehen sein, dass die Sensoren 10 und 11 in getrennten Gehäusen untergebracht sind mit getrennten Sensordatenauswertungen. Die Datenübertragung ist hier lediglich von der Sensordatenauswertung 12 zum Steuergerät 13 unidirektional. Dies vereinfacht den Aufbau und spart damit Kosten. Alternativ ist es möglich, dass diese Verbindung bidirektional ausgebildet ist oder auch an eine Busverbindung angeschlossen ist.

Figur 2 zeigt, dass die Sensoren 10 und 11 jeweils durch schräg angeordnete Sensoren 20 und 21 nachgebildet werden können. Damit ist eine bessere Crashrichtungserkennung möglich. Würden beide Sensoren 10 und 11 durch solche Sensoren 20 und 21 ersetzt, hätte man vier Sensoren.

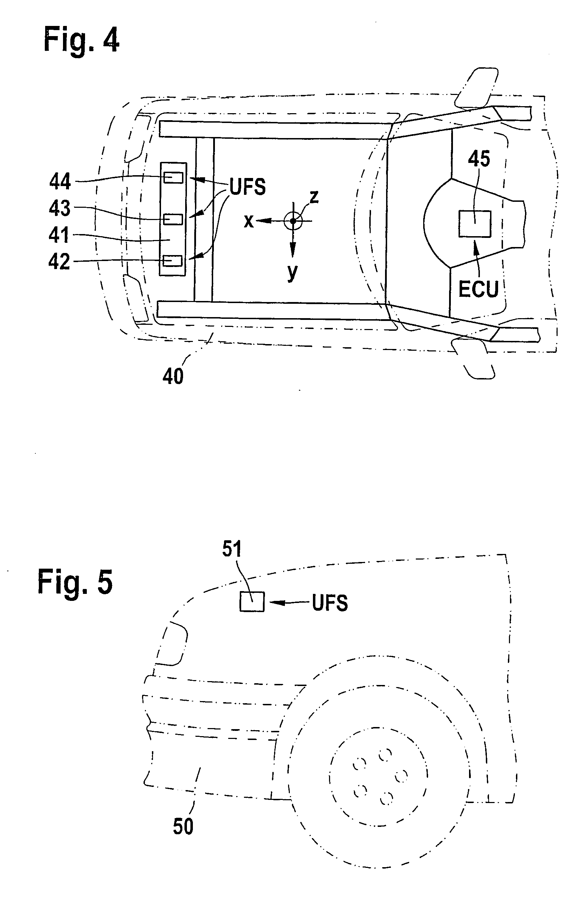

Figur 4 zeigt Einbauorte der erfindungsgemäßen Sensoranordnung. Auf einem Kühlerquerträger 41 eines Fahrzeugs 40 im Frontbereich des Fahrzeugs sind hier die Einbauorte der erfindungsgemäßen Sensoranordnung dargestellt. Entweder wird sie mittig am Ort 43 angeordnet oder jeweils links und rechts an den Orten 42 und 44. Die erfindungsgemäße Sensoranordnung, egal wo sie eingebaut ist, ist dann mit einem zentral angeordneten Steuergerät 45 verbunden.

Figur 5 zeigt in einer weiteren schematischen Darstellung den Einbauort der erfindungsgemäßen Sensoranordnung. In einem Fahrzeug 50 wird die Sensoranordnung 51 sehr weit oben am Kühlerquerträger eingebaut.

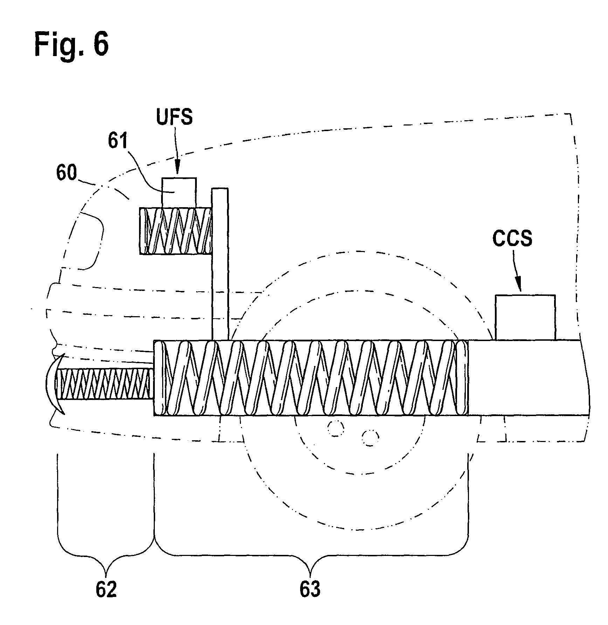

Figur 6 zeigt in einer schematischen Darstellung, wo die erfindungsgemäße Sensoranordnung 61 in einem Fahrzeug 60 in Bezug auf die Crashzone angeordnet ist. Man unterscheidet bei einem Fahrzeug eine Deformationszone 62, die bereits bei niedrigen Geschwindigkeiten deformiert wird und eine Zone 63, die nur bei hohen Geschwindigkeiten zwischen Aufprallobjekt und dem Fahrzeug deformiert wird. Die erfindungsgemäße Sensoranordnung 61 wird in der Übergangszone zwischen der Deformationszone für niedrige Geschwindigkeiten und für hohe Geschwindigkeiten angeordnet. Dies ist für seine Funktionsweise von großem Vorteil.

Ein üblicher Beschleunigungssensor weist einen Messbereich von ± 220 g und eine Empfindlichkeit von 9 mV pro g auf. Er weist Selbsttestfähigkeit auf und ist in einem Plastikgehäuse einfach montierbar.

## Patentansprüche

1. Sensoranordnung zur Aufprallerkennung, wobei die Sensoranordnung (61) in eingebautem Zustand im Außenbereich eines Fahrzeugs (60) angeordnet ist, wobei die Sensoranordnung (61) Upfrontsensoren aufweist und derart konfiguriert ist, dass die Sensoranordnung (61) wenigstens eine kinematische Größe in Fahrzeuglängsrichtung (X) und in Fahrzeugvertikalrichtung (Z) erfasst, wobei die Sensoranordnung (42 bis 44) derart mit einem Steuergerät (45) gekoppelt ist, dass das Steuergerät (45) anhand der Signale der wenigstens ersten und zweiten Beschleunigungssensoren erkennt, ob die Beschleunigungssensoren aus ihrer ursprünglichen Lage verdreht sind.

2. Sensoranordnung nach Anspruch 1, **dadurch gekennzeichnet, dass** die Sensoranordnung (61) zur Erfassung der wenigstens einen kinematischen Größe wenigstens einen ersten Beschleunigungssensor (10) zur Erfassung der Beschleunigung in Fahrzeuglängsrichtung und wenigstens einen zweiten Beschleunigungssensor (11) zur Erfassung der Beschleunigung in Fahrzeugvertikalrichtung aufweist.

3. Sensoranordnung nach Anspruch 2, **dadurch gekennzeichnet, dass** der wenigstens erste und der wenigstens zweite Beschleunigungssensor (10, 11) in einem gemeinsamen Gehäuse angeordnet sind.

4. Sensoranordnung nach einem der vorhergehenden Ansprüche, **dadurch gekennzeichnet, dass** die Sensoranordnung (61) in eingebautem Zustand am oberen Kühlerquerträger (41) angeordnet ist.

5. Sensoranordnung nach einem der Ansprüche 2 bis 4, **dadurch gekennzeichnet, dass** der wenigstens erste Beschleunigungssensor (10) und der wenigstens zweite Beschleunigungssensor (11) in eingebautem Zustand mittig in der Fahrzeugfront angeordnet sind.

6. Sensoranordnung nach einem der Ansprüche 2 bis 4, **dadurch gekennzeichnet, dass** jeweils ein Paar des ersten und zweiten Beschleunigungssensors in eingebautem Zustand an der rechten und linken Seite der Fahrzeugfront angeordnet sind.

7. Sensoranordnung nach einem der vorhergehenden Ansprüche, **dadurch gekennzeichnet, dass** die Sensoranordnung derart konfiguriert ist, dass die Sensoranordnung kinematische Größen in Fahrzeugquerrichtung erfasst.

## Claims

1. Sensor arrangement for identifying a collision, with the sensor arrangement (61) being arranged in the outer region of a vehicle (60) in the installed state, with the sensor arrangement (61) having upfront sensors and being designed in such a way that the sensor arrangement (61) detects at least one kinematic variable in the longitudinal direction (X) of the vehicle and in the vertical direction (Z) of the vehicle, with the sensor arrangement (42 to 44) being coupled to a controller (45) in such a way that the controller (45) uses the signals from the at least first and second acceleration sensors to identify whether the acceleration sensors have turned out of their original position.

2. Sensor arrangement according to Claim 1, **characterized in that** the sensor arrangement (61) for detecting the at least one kinematic variable has at least one first acceleration sensor (10) for detecting acceleration in the longitudinal direction of the vehicle and at least one second acceleration sensor (11) for detecting acceleration in the vertical direction of the vehicle.

3. Sensor arrangement according to Claim 2, **characterized in that** the at least first acceleration sensor (10) and the at least second acceleration sensor (11) are arranged in a common housing.

4. Sensor arrangement according to one of the preceding claims, **characterized in that** the sensor arrangement (61) is arranged on the upper radiator crossmember (41) in the installed state.

5. Sensor arrangement according to one of Claims 2 to 4, **characterized in that**, in the installed state, the at least first acceleration sensor (10) and the at least second acceleration sensor (11) are arranged centrally in the front of the vehicle.

6. Sensor arrangement according to one of Claims 2 to 4, **characterized in that**, in the installed state, a pair comprising the first and second acceleration sensor is in each case arranged on the right-hand side and left-hand side of the front of the vehicle.

7. Sensor arrangement according to one of the preceding claims, **characterized in that** the sensor arrangement is designed in such a way that it detects kinematic variables in the transverse direction of the vehicle.

## Revendications

1. Dispositif de capteurs (61) pour la détection de collisions, disposé, à l'état monté, dans la zone extérieure d'un véhicule (60), et présentant des capteurs frontaux en étant configuré pour détecter au moins une grandeur cinématique dans la direction longitudinale (X) du véhicule et dans la direction verticale (Z) du véhicule, avec un agencement de capteurs (42 à 44) couplé à un appareil de commande (45) pour que cet appareil de commande (45) détecte, à l'aide des signaux au moins des premier et deuxième capteurs d'accélération, si les capteurs d'accélération sont détournés de leur position initiale.

2. Dispositif de capteurs selon la revendication 1,
**caractérisé en ce que**
le dispositif de capteurs (61) destiné à détecter l'au moins une grandeur cinématique présente au moins un premier capteur d'accélération (10) pour détecter l'accélération dans la direction longitudinale du véhicule et au moins un deuxième capteur d'accélération (11) pour détecter l'accélération dans la direction verticale du véhicule.

3. Dispositif de capteurs selon la revendication 2,
**caractérisé en ce que**
le premier et le deuxième capteur d'accélération (10, 11) sont disposés dans un boîtier commun.

4. Dispositif de capteurs selon l'une des revendications précédentes,
**caractérisé en ce que**
le dispositif de capteurs (61) est installé, à l'état monté, sur la traverse supérieure de radiateur (41).

5. Dispositif de capteurs selon l'une des revendications 2 à 4,
**caractérisé en ce que**
au moins le premier capteur d'accélération (10) et le deuxième capteur d'accélération (11), à l'état monté, sont disposés au milieu à l'avant du véhicule.

6. Dispositif de capteurs selon l'une des revendications 2 à 4,
**caractérisé en ce que**
à chaque fois, une paire de premier et deuxième capteurs d'accélération est disposée, à l'état monté, du côté droit et gauche de l'avant du véhicule.

7. Dispositif de capteurs selon l'une des revendications précédentes,
**caractérisé en ce qu'**
il détecte des grandeurs cinématiques dans la direction transversale du véhicule.
